# EUROPÄISCHE PATENTSCHRIFT

(11) **EP 2 611 665 B1**
(45) Veröffentlichungstag und Bekanntmachung des Hinweises auf die Patenterteilung: **11.01.2017**
(21) Anmeldenummer: 11801548.6
(22) Anmeldetag: 22.06.2011
(51) Int. Cl.: B60W 50/08, B60W 50/00

(54) **REGELUNG DER FAHRWEISE EINES KRAFTFAHRZEUGES INNERHALB VON ORTSCHAFTEN (CITY-FAHRZYKLUS)**
CONTROL OF THE DRIVING STYLE OF A MOTOR VEHICLE WITHIN LOCALITIES (CITY DRIVING CYCLE)
RÉGULATION DU MODE DE CONDUITE D'UN VÉHICULE AUTOMOBILE DANS LES AGGLOMÉRATIONS (CYCLE DE CONDUITE EN VILLE)

(30) Priorität: 03.09.2010 DE 102010036266
(43) Veröffentlichungstag der Anmeldung: 10.07.2013
(73) Patentinhaber: KOSLOW, Alexander, 84036 Landshut (DE)
(72) Erfinder: KOSLOW, Alexander, 84036 Landshut (DE)
(86) Internationale Anmeldenummer: PCT/DE2011/001332
(87) Internationale Veröffentlichungsnummer: WO 2012/037911

(56) Entgegenhaltungen:
- WO-A1-02/063163
- DE-A1- 10 138 119
- DE-A1- 10 253 809
- DE-A1-102007 053 279

## Beschreibung

Es gibt heute bereits viele Regelungsarten für Kraftfahrzeuge, die ökologische und ökonomische Vorgaben berücksichtigen, ohne den Lenker eines Fahrzeuges mit Sondertätigkeiten für eine Sonderfunktion zu belasten. Derartige Regelungen werden meist vom Lenker eines Kraftfahrzeuges eingegeben und laufen dann automatisch ab. Eine derartige Regelung schlägt die Erfindung für eine Fahrsituation vor, die bisher nicht erfasst ist, in ihrer Bedeutung jedoch nicht weniger wichtig ist, als alle anderen bereits geregelten Fahrsituationen. Ein wenig konstanter Fahrbetrieb spielt sich im wesentlichen innerhalb geschlossener Ortschaften ab. Verkehrsregelungen, unüberschaubarer Fußgänger-, Lieferverkehr und Behinderungen durch Baustellen führen zu einer ständigen Stop and Go Situation.

Das Problem bei Kraftfahrzeugen das sich deshalb heute stellt ist der Verbrauch von Energie und die damit verbundene Belastung der Umwelt durch Emissionen innerhalb geschlossener Ortschaften.

Es sind heute bereits Hilfssysteme für Kraftfahrzeuge bekannt, die Hinweis darüber geben, ob eine Fahrweise ökologisch ist, d. h. wie hoch der Kraftstoffverbrauch pro gefahrenen Kilometer ist. Damit soll dem Fahrer eines Kraftfahrzeuges signalisiert werden seine Fahrweise so auszurichten, dass diese ökologisch und damit auch wirtschaftlich sinnvoll ist, die sog. Economy-Anzeige. Ebenso erhält ein Lenker eines Off-Road Fahrzeuges Hinweise wie sein Fahrzeug am wirtschaftlichsten im Gelände- oder Straßenverkehr gefahren werden kann.

Was es jedoch nicht gibt ist eine einfache Einstellmöglichkeit für einen Fahrbetrieb innerhalb geschlossener Ortschaften, der all die vorstehend beschriebenen Unwägbarkeiten berücksichtigt. Jeder Fahrer eines Kraftfahrzeuges ist sich selbst überlassen und nur seine Erfahrung kann Hilfestellung für eine ökologisch und ökonomisch sinnvolle Fahrweise innerhalb von Ortschaften geben.

Um dem abzuhelfen schlägt diese Erfindung vor einen Betätigungseinrichtung am Armaturenbrett oder Lenkrad eines Kraftfahrzeuges vorzusehen, die den Fahrer eines Kraftfahrzeuges innerhalb von Ortschaften hierbei unterstützt. Eine solche Betätigungseinrichtung kann in einem manuell betätigbaren Schaltknopf aber auch in einer Automatiksteuerung gesehen werden, die von einem Signalgeber bei der Einfahrt in eine Ortschaft über Funk- oder Lichtsignale aktiviert wird.

Seien all diese Hilfen bedingt durch die Verbrennung von kohlenwasserstoffhaltigen Primärenergieträgern, wie Benzin oder Dieselkraftstoff oder bei Elektroantrieben, durch die bei der Erzeugung der elektrischen Energie freigesetzten umweltschädlichen Komponenten, so sollte doch immer eine zu beachtende Richtschnur der Energieverbrauch sein. Gerade auch bei Elektroantrieben ist der Energieverbrauch von besonderer Bedeutung. Dieser begrenzt die Funktionsfähigkeit und damit die Reichweite für das Fahrzeug bis zu der ein solches Fahrzeug, bei ursprünglich voll geladener Batterie, ohne weitere Aufladung der elektrischen Energie speichernden Aggregate gefahren werden kann. Die Funktionsfähigkeit des Fahrzeuges, ohne Notwendigkeit für ein Nachladen der Energiespeicher, ist aber essentiell für eine allgemeine Einführung solcher Fahrzeugantriebe. Heute bekannte elektrische Energiespeicher, z. B. Akkumulatoren, Batterien etc. haben nur eine relativ geringe Speicherkapazität, sodass nur ein optimierter Energieverbrauch im Fahrbetrieb diesen Mangel lindert und eine akzeptable Fahrleistung ermöglicht kann.

Es ist bereits bekannt in Kraftfahrzeugen Schaltelemente anzuordnen mittels deren gewünschte Fahrgeschwindigkeiten für das Fahrzeug vorgegeben werden können und die dann automatisch den Brennstoffzufluss zum Motor so steuern, sodass eine gewünschte Fahrgeschwindigkeit eingehalten wird, Dies kann für innerörtlichen als auch außerörtlichen Fahrbetrieb gelten. Entscheidend ist die Einhaltung einer bestimmten Fahrgeschwindigkeit durch Motorsteuerung und/oder Getriebesteuerung. Die Motorsteuerung erfolgt dabei über eine Regelung der Brennstoffzufuhr. Wesentlich für derartige Steuerungen ist keine ökologisch bedingte Einsparung im Energieverbrauch, sondern die Einhaltung einer bestimmten Geschwindigkeit eines Kraftfahrzeuges, sei dies wegen einer Geschwindigkeitsbegrenzung beim Durchfahren einer unfallträchtigen Fahrstrecke oder innerhalb von Ortschaften, wegen Vermeidens von Lärmbelästigung und ähnlichen Gegebenheiten. Der innerörtliche Fahrbetrieb spielt dabei nur eine untergeordnete Rolle. Außer einer Motor- und/oder Getriebesteuerung bleiben andere Komponenten am Kraftfahrzeug unberücksichtigt.

Es ist auch bekannt bei Hybridantrieben den Ladezustand der Batterien zu kontrollieren, um ein Überladen oder völliges Entladen derselben zu vermeiden und dementsprechend entweder Energie den Batterien zuzuführen oder die Zufuhr zu unterbrechen.

Es sind auch Schaltsysteme bekannt mittels deren eine effiziente Fahrweise nach einem vorgegebenen Schaltzyklus, abgestimmt auf die individuelle Kenndaten eines spezifischen Verbrennungsmotors, eingestellt werden kann, die über elektronische Schalteinrichtung einzelne Aggregate, die für den Betrieb des Verbrennungsmotors maßgebend sind, optimiert werden (z. B. zusätzliche Kühlung einzelner Aggregate).

DE 101 38 119 offenbart einen elektronisch ansteuerbaren Antriebsstrang in einem Kraftfahrzeug mit einem manuell betätigbaren Schalter zum Auswählen eines Fahrstils.

DE102 53 809 offenbart eine Steuerung der Antriebseinheit eines Kraftfahrzeugs mit einem manuell betätigbaren Schaltelement zur/auswahlzen Fahrstilen unterschiedlicher Fahrdynamik.

Hiervon unterscheidet sich die Erfindung essentiell. Nicht allgemeine Geschwindigkeitsregelungen, oder allgemein anwendbare Fahrzyklen sind Ziel der Erfindung, sondern Regelung und Beeinflussen aller denkbaren und an einem jeweiligen Kraftfahrzeug vorhandenen Aggregate die einen ökologischen Fahrbetrieb innerhalb von Ortschaften bewirken, hierbei spezifisch die innerörtliche Verkehrssituation beachtend. Dies jedoch nicht alleine durch Beeinflussen der Betriebskennlinie einer Brennkraftmaschinen, sondern auch durch weitere Maßnahmen die den Energieverbrauch, auch bei Elektroantrieben oder Hybridantrieb von Kraftfahrzeugen, beeinflussen.

Hier setzt die Erfindung an. Diese Unzulänglichkeiten bei den Antrieben von Kraftfahrzeugen, zumindest zu verringern, ist eine der Aufgaben dieser Erfindung. Damit verbunden ist eine Verbesserung der ökonomischen und ökologischen Randbedingungen beim Betrieb solcher Kraftfahrzeuge.

Diese Aufgabe wird durch die in Anspruch 1 definierte Erfindung gelöst; Ausgestaltungen der Erfindung sind in den anhängigen Ansprüchen definiert.

Die Erfindung schlägt vor bei Betrieb eines Kraftfahrzeuges innerhalb einer Ortschaft oder auch bei allgemein vergleichbaren Verkehrssituationen, dem Führer eines Kraftfahrzeuges eine Möglichkeit an die Hand zu geben, mittels der er durch einen einfachen Handgriff ein Steuersystem in Gang setzt, das selbständig nach einem vorgegebenen Systemablauf alle Aggregate, die ein Kraftfahrzeug umfasst, so regelt, dass diese den Betrieb des Fahrzeuges derart steuern, dass das Fahrzeug eine Fahrweise fährt, die einen minimalen Energieverbrauch und damit eine minimale Umweltbelastung, bedeuten. Dies heißt, dass beispielsweise der Motor-lauf, im Hinblick auf Kraftstoffverbrauch, auf Drehzahl, Kühlung oder Getriebeeinstellung so geregelt wird, dass bei der jeweiligen Fahrsituation ein minimaler Kraftstoffeinsatz notwendig ist. Ferner, dass Federung und Luftdruck in den Reifen so eingestellt werden, dass der Roll-widerstand der Reifen auf der Fahrbahn ein Minimum und die Beleuchtung von Fernlicht auf Abblendlicht umgeschaltet wird. All diese Maßnahmen dienen dem Zwecke ein Kraftfahrzeug so zu regeln, dass das Ziel eines minimalen Energieeinsatzes, insbesondere bei einer Fahrt z. B. innerhalb einer Ortschaft, gewährleistet ist. Die Anzahl der regelbaren Funktionsträger ist natürlich von der Ausstattung eines jeweiligen Fahrzeugs abhängig und kann somit variieren. So können bei einem Fahrzeug mit automatischem Schaltgetriebe die Drehzahl des Motors und die Gangschaltung so aufeinander abgestimmt werden, dass das Ziel der Minimierung des Energieeinsatzes erreicht wird. Bei einer manuell betätigbaren Gangschaltung kann am Armaturenbrett ein Hinweis erscheinen, welcher Gang zur Minimierung des Energieverbrauchs sinnvollerweise eingelegt werden muss.

Beim Betrieb eines Kraftfahrzeuges innerhalb geschlossener Ortschaften sind besondere Fahrsituationen gegeben, die eine ausgewogene Fahrweise erfordern, sofern man einen minimalen Energieeinsatz berücksichtigen will, um damit ökologischen Erfordernissen so gut als möglich gerecht zu werden. Eine derartige Fahrsituation ist außerhalb von Ortschaften meist nicht gegeben. So kann beim Anhalten vor einer Verkehrsampel innerorts oder auch außerorts an Baustellen oder an einem geschlossenen Bahnübergang oder unter ähnlichen Umständen ein Abschalten des Motors sowohl aus ökologischer als auch ökonomischer Sicht geboten sein. Diese Fahrsituationen können auch bei Geschwindigkeitsbegrenzungen, Beschleunigung und bei Stau etc. auftreten. Auch die Regelung des Zündzeitpunkts, die Abschaltung von einzelnen Zylindern tragen im Sinne der Erfindung bei, da durch eine verzögerte oder beschleunigte Zündung (Früh- oder Spätzündung bezogen auf den Kolbenhub, bzw. vor oder nach Erreichen des oberen Totpunktes eines Kolbens im Arbeitszyklus eines Verbrennungsmotors), der Kraftstoffverbrauch nicht unwesentlich beeinflusst werden kann. Der Rollwiderstand eines Reifens hängt bekanntermaßen u. a. vom Reifendruck ab. All diese Parameter können, sofern die technische Ausstattung eines Kraftfahrzeuges dies erlaubt, über ein zentral am Armaturenbrett oder Lenkrad angeordnetes Schaltelement ausgelöst werden, das willkürlich von Hand oder automatisch aktiviert wird. Dadurch werden spezielle Sachkenntnisse, Konzentration und Aufmerksamkeit seitens des Lenkers eines Kraftfahrzeuges nicht mehr erforderlich. So kann dieses Schaltelement z. B. von einem manuell betätigbaren Schalter gebildet sein, der eine Steuereinrichtung aktiviert, die wiederum auf alle Steuerelemente für die einzelnen Funktionsträger einwirkt. Statt eines solchen Schaltelements besteht auch die Möglichkeit am Eingang zu einer Ortschaft ein Funk- oder Lichtsignale aussendendes Gerät zu installieren, das mit seinen Signalen bei entsprechend ausgerüsteten Kraftfahrzeugen diese Steuerfunktionen auslöst und beim Verlassen des Ortsbereiches wieder deaktiviert. Das Schaltgerät gibt einen Impuls auf eine Steuereinrichtung im Kraftfahrzeug, das sämtliche Schaltelemente an den verschiedenen Funktionsträgern aktiviert und damit die gewünschten Schaltvorgänge einleitet und die Arbeitsweise der einzelnen Funktionseinheiten optimiert, d. h. Zündzeitpunkt, Reifendruck, Lichtschaltung, Motordrehzahl, Getriebeschaltung etc. in eine gewünschte optimale Funktionsstellungen zur Minimierung des Energieverbrauchs bringt.

Beim Verlassen des innerörtlichen Verkehrsraums kann dann in ähnlicher Weise die erfindungsgemäße Steuerung wieder deaktiviert werden. Dies könnte auch dadurch geschehen, dass bei Überschreiten der innerörtlich zugelassenen Geschwindigkeit, ähnlich wie bei Geschwindigkeitsregelsystemen die Innerortsteuerung deaktiviert wird und alle vorher auf Innerortsbetrieb geschalteten Organe wiederum auf Normalbetrieb gesteuert werden.

Um den innerörtlichen Fahrbetrieb zentral einzustellen, sollte das hierfür vorgesehene Schaltelement, z. B. ein manuell betätigbarer Schalter beispielsweise mittels eines großen "C" oder der Aufschrift "City" kenntlich gemacht sein.

### Bezeichnungen

- 1: Schaltelement
- 2: Schalter
- 3: Steuereinrichtung
- 4: Steuerelement
- 5: Funktionsträger
- 6: Armaturenbrett
- 7: Getriebe
- 8: Reifen
- 9: Federung
- 10: Antriebsmotor
- 11: Beleuchtung
- 12: Zündung

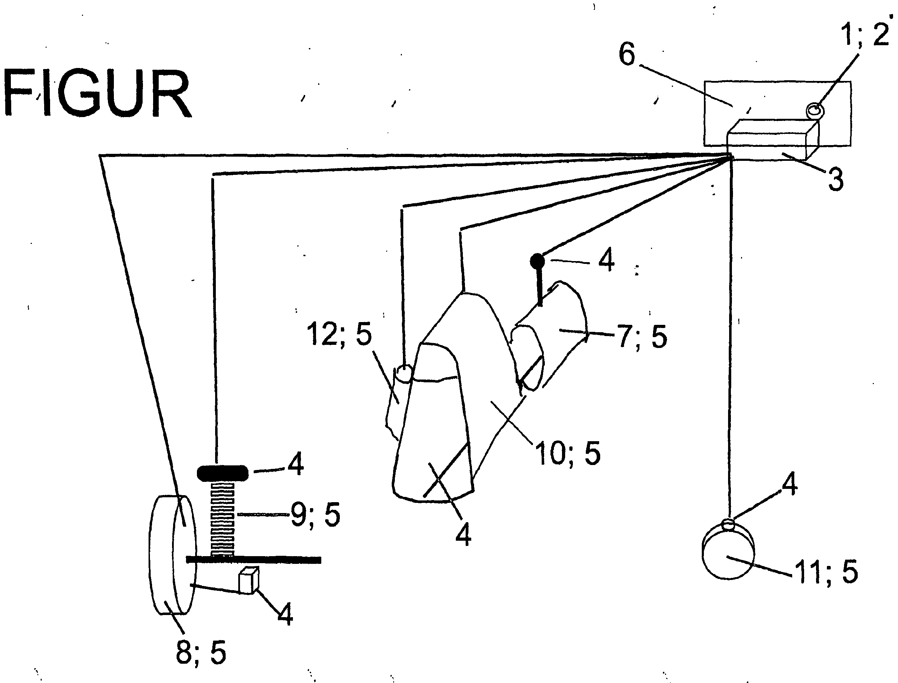

## Patentansprüche

1. Steuerung eines Kraftfahrzeuges für eine ökologische, innerörtliche Betriebsweise, wobei im oder am Kraftfahrzeug ein Schaltelement (1) vorgesehen ist, das manuell oder automatisch oder von einem einen Impuls aussendenden externen Sender betätigbar ist, das auf alle zentralen Regelsysteme an den einzelnen Funktionsträgern (5), darunter Antriebsmotor, Getriebe, Reifen, Beleuchtung, wirkt und diese auf minimalen Energieeinsatz einstellt.

2. Steuerung nach Patentanspruch 1, **dadurch gekennzeichnet**, class die Steuerparameter Motordrehzahl, Getriebeeinstellung, Beleuchtung und Leerlaufsteuerung sind.

3. Steuerung nach einem der vorhergehenden Ansprüche, **dadurch gekennzeichnet, dass** Steuerparameter Reifendruck, Zündzeitpunkt, Motorabschaltung beim Anhalten vor Haltesignalen, spezielle Kühlung von Motor und/oder Ladeluft sind.

4. Steuerung nach einem der vorhergehenden Ansprüche, **dadurch gekennzeichnet, dass** das Schaltelement (1) am Armaturenbrett (6) oder Lenkrad deutlich und unverwechselbar gekennzeichnet ist.

5. Steuerung nach einem der vorhergehenden Ansprüche, **dadurch gekennzeichnet, dass** eine Steuereinrichtung (3) über ein externes Funksignal aktivierbar ist.

## Claims

1. Control of a motor vehicle for ecological, inner-city operation, comprising a switch element (1) in or on the motor vehicle, which can be operated manually or automatically or by an external transmitter sending an impulse and which operates on all central control systems at the individual functional units (5), including drive motor, gearbox, tyres, lighting, and adjusts these units to minimal energy requirements.

2. Control according to claim 1, **characterised in that** the control parameters are motor revolution speed, gearbox setting, lighting and idle control.

3. Control according to one of the preceding claims, **characterised in that** the control parameters are tyre pressure, ignition time, motor switch-off when stopping at stop signals, special cooling of the engine and/or the charge air.

4. Control according to one of the preceding claims, **characterised in that** the switch element (1) is clearly and unmistakably marked on the dashboard or steering wheel.

5. Control according to one of the preceding claims, **characterised in that** a control device (3) can be activated by an external radio signal.

## Revendications

1. Contrôle d'un véhicule automobile pour un mode d'opération écologique et en agglomération, avec un élément de commutation (1) qui est envisagé dans ou sur le véhicule automobile et qui peut être actionné manuellement ou automatiquement ou par un émetteur externe qui émit une impulsion et qui a un effet sur tous les systèmes de régulation centraux sur les éléments fonctionnels individuels (5), parmi eux le moteur d'entrainement, la boîte de vitesses, les pneus, l'illumination, et qui règle ceux-ci à la consomption d'énergie minimale.

2. Contrôle selon la revendication de brevet 1, **caractérisé par le fait que** les paramètres de contrôle sont le régime, le réglage de la boîte de vitesses, l'illumination et le contrôle au point mort.

3. Contrôle selon une des revendications précédentes, **caractérisé par le fait que** des paramètres de contrôle sont la pression des pneus, le moment d'allumage, l'arrêt du moteur en stoppant devant les signaux d'arrêt, un refroidissement spécial du moteur et/ou de l'air de suralimentation.

4. Contrôle selon une des revendication précédentes, **caractérisé par le fait que** l'élément de commutation (1) sur le tableau de bord (6) ou le volant est clairement et uniquement marqué.

5. Contrôle selon une des revendications précédentes, **caractérisé par le fait qu'**une installation de contrôle (3) peut être activée par un signal radio externe.
